# EUROPÄISCHE PATENTSCHRIFT

(11) **EP 3 185 736 B1**
(45) Veröffentlichungstag und Bekanntmachung des Hinweises auf die Patenterteilung: **31.10.2018**
(21) Anmeldenummer: 15753674.9
(22) Anmeldetag: 19.08.2015
(51) Int. Cl.: A47J 43/08, F16H 1/22

(54) **GETRIEBE FÜR EINE KÜCHENMASCHINE**
GEARING FOR A FOOD PROCESSOR
TRANSMISSION DESTINÉE À UN ROBOT DE CUISINE

(30) Priorität: 28.08.2014 DE 102014217243
(43) Veröffentlichungstag der Anmeldung: 05.07.2017
(73) Patentinhaber: BSH Hausgeräte GmbH, 81739 München (DE)
(72) Erfinder: KOVACIC, Peter, 3303 Gomilsko (SI); IVANUSIC, Marko, 8340 Crnomelj (SI); ZLAUS, Uros, 3201 Smartno v Rozni dolini (SI)
(86) Internationale Anmeldenummer: PCT/EP2015/068988
(87) Internationale Veröffentlichungsnummer: WO 2016/030237

(56) Entgegenhaltungen:
- EP-A1- 1 459 666
- EP-A1- 1 967 105
- DE-C1- 4 126 516
- NL-A- 9 001 299

## Beschreibung

### Gebiet der Erfindung

Die Erfindung betrifft ein Getriebe für eine Küchenmaschine mit einer antriebsseitigen Eingangswelle und mindestens einer abtriebsseitigen Ausgangswelle. Die Eingangs- und eine erste Ausgangswelle stehen über mindestens zwei Übersetzungswellen mittels Zahnrädern in Wirkverbindung zueinander, so dass eine Drehung einer Eingangswelle auf die erste Ausgangswelle übertragen wird. Die Erfindung betrifft außerdem eine Küchenmaschine mit einem Getriebe.

### Hintergrund der Erfindung

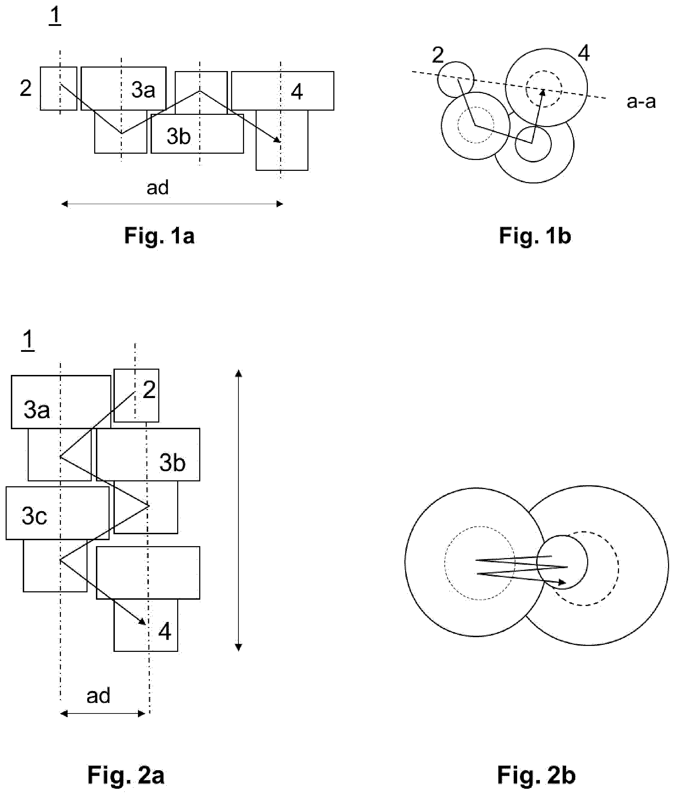

Aus dem Stand der Technik sind Getriebe für Küchenmaschinen bekannt, bei denen ein an einer Eingangswelle anliegendes Drehmoment über mehrere, typischerweise mindestens zwei bis drei Übersetzungswellen auf eine Ausgangswelle übertragen wird, an der üblicherweise ein Werkzeug angeordnet ist. Das Getriebe kann dabei als Untersetzungs- oder Übersetzungsgetriebe ausgelegt sein und somit die Drehzahl verringern oder erhöhen und entsprechend das Drehmoment vergrößern oder vermindern. Gemäß dem Stand der Technik sind zwei Arten von Getrieben weit verbreitet. Bei der ersten Art (siehe Figur 1) sind jeweils zwei Zahnräder pro Welle in zwei parallelen Ebenen angeordnet, so dass die Kraftübertragung horizontal im Zick-Zack von der einen zur anderen Ebene verläuft. Bei der zweiten Art (siehe Figur 2) sind Doppelzahnräder bestehend aus einem kleinen und einem größeren Zahnrad koaxial auf zwei Drehachsen gelagert, so dass die Kraftübertragung vertikal im Zick-Zack von der einen zur anderen Drehachse verläuft.

Die Offenlegungsschrift DE 197 56 923 A1 offenbart eine Getriebeeinrichtung für den häuslichen Bedarf, bei der ein Planetenrad und ein Hohlrad mehrere Zahnradpaare unterschiedlicher Durchmesser aufweisen und das Hohlrad in Achsrichtung verschiebbar ist, sodass in einer Betriebsstellung die Zahnkränze größeren Durchmessers und in der anderen Betriebsstellung die Zahnkränze kleineren Durchmessers in Zahneingriff gelangen. Dadurch, dass das mindestens eine Planetenrad und das Hohlrad mindestens je zwei Zahnkränze unterschiedlicher Durchmesser aufweisen und das Hohlrad in Achsrichtung verschiebbar ist und dadurch in der einen Betriebsstellung die Zahnkränze des größeren Durchmessers in Eingriff gebracht werden können, während in der anderen oder einer weiteren Stellung die Zahnkränze der anderen, kleineren Durchmesser in Eingriff gebracht werden können, sodass zumindest zwei oder mehrere unterschiedliche Übersetzungsverhältnisse eingerichtet werden können. Bevorzugt sind zwei Zahnradpaare, also zwei wechselbare Getriebestufen. Bevorzugt ist zudem, eine erste Ausgangswelle hülsenförmig in Form einer außen oder innen verzahnten Hülse auszubilden, die die zweite Ausgangswelle, die durch den verlängerten Abschnitt der Eingangswelle gebildet wird, konzentrisch umgibt. Vorzugsweise wird hierbei die zweite Ausgangswelle mit einer axial verlaufenden Verzahnung versehen, sodass auf diese Verzahnung ein entsprechendes Arbeitsteil aufgesteckt werden kann, während die erste Ausgangswelle auf ihrer radial außen liegenden Seite eine Längsverzahnung aufweist, um darauf, ohne mit der Verzahnung der zweiten Ausgangswelle in Wechselwirkung zu treten, ein Antriebsteil aufzustecken.

Aus der Offenlegungsschrift DE 10 2007 011 517 A1 ist ein Küchengerät für den häuslichen Bedarf bekannt, bei dem gleichzeitig am Arbeitswerkzeug und an der Getriebeeinrichtung Mittel ausgebildet sind, durch die beim Aufstecken eines Arbeitswerkzeugs die für das Arbeitswerkzeug richtige Getriebestufe gewählt wird. Es können gleichzeitig zwei Arbeitswerkzeuge eingesetzt werden. Sie können nebeneinander aufgesteckt werden.

Die europäische Patentanmeldung EP 1 717 552 A2 zeigt einen Mischkopf in einer Maschine zum Kneten von Nahrungsmitteln, der bevorzugt vier Werkzeuge zum Bearbeiten von Nahrungsmitteln umfasst. Ein Getriebe versetzt die Mixelemente in Rotation um ihre eigene Achse. Bevorzugt sind diese in gleichen Abständen von 90° voneinander angeordnet.

Die Offenlegungsschrift DE 198 45 182 A1 offenbart ein zweistufiges stegloses Planetengetriebe in Wolfromanordnung. Das Planetenrad bzw. die Planetenräder sind als Stufenplanet bzw. Stufenplaneten ausgebildet und die Stufe, die dem Abtriebsrad zugeordnet ist, wird von einem Hilfsrad abgestützt. Dabei verläuft die Drehachse fluchtend zur Antriebs-/Abtriebsachse.

Die deutsche Patentschrift DE 41 26 516 C1 betrifft eine Maschine zum Zubereiten von Lebensmitteln, insbesondere eine Küchenmaschine mit auswechselbaren Arbeitswerkzeugen, die über eine mindestens ein Kupplungselement aufweisende Antriebswelle wahlweise an Abgriffstellen eines unterschiedliche Drehzahlen aufweisenden Getriebes ankuppelbar und über einen Eingriff mit einem Schnappverschluß lösbar verbindbar sind. Ein jedes Arbeitswerkzeug ist mit einem gleichen Kupplungselement ausgestattet, das je nach Arbeitseinsatz bzw. Antriebsart einen unterschiedlich großen Abstand zum Eingriff der Antriebswelle eines Arbeitswerkzeugs aufweist.

Die niederländische Patentanmeldung NL 9 001 299 A beschreibt eine Küchenmaschine, die einen Motor zum gleichzeitigen Antreiben von zwei Werkzeugen mittels eines Zahnradgetriebes umfasst, wobei das Zahnradgetriebe ein motorgetriebenes Ritzel und zwei Zahnräder zum Antreiben der Werkzeuge umfasst, wobei die Zahnräder eine entgegengesetzte Drehrichtung aufweisen. Ein Zahnrad weist einen Außenzahnkranz auf und wird direkt durch das Ritzel angetrieben. Das zweite Zahnrad weist einen Innenzahnkranz auf und wird auch direkt durch das Ritzel angetrieben.

Die europäische Patentanmeldung EP 1 459 666 A1 beschreibt einen elektrischen Handmischer, der ein Gehäuse und einen in dem Gehäuse angebrachten Motor umfasst. In dem Gehäuse ist ein Getriebe gelagert, das mit einer Abtriebswelle des Motors gekoppelt ist. Ein Paar Spindeln mit entsprechenden Achsen sind um eine gemeinsame Achse positioniert. Die Spindeln sind mit dem Getriebe zur Drehung um die jeweiligen Achsen gekoppelt und drehen um die dritte Achse.

### Der Erfindung zugrundeliegende Aufgabe

Der Erfindung liegt die Aufgabe zugrunde, ein verbessertes Getriebe für eine Küchenmaschine bereitzustellen. Insbesondere soll ein Getriebe bereitgestellt werden, das besonders kompakt und platzsparend ist und somit besonders gut für die Verwendung in einer Küchenmaschine geeignet ist.

### Erfindungsgemäße Lösung

Die Bezugszeichen in sämtlichen Ansprüchen haben keine einschränkende Wirkung, sondern sollen lediglich deren Lesbarkeit verbessern.

Die der Erfindung zugrunde liegende Aufgabe wird gelöst durch ein Getriebe für eine Küchenmaschine gemäß Anspruch 1. Die Zahnräder des Getriebes sind in drei oder mehr verschiedenen Ebenen angeordnet und die Wellen drehbar um mindestens drei voneinander beabstandete Drehachsen angeordnet. Dabei verläuft eine Kraftübertragung zwischen der Eingangswelle und einer ersten der mindestens zwei weiteren Übersetzungswellen ausschließlich über Zahnräder in einer ersten Ebene, wobei eine Kraftübertragung zwischen den mindestens zwei weiteren Übersetzungswellen ausschließlich über Zahnräder in von der ersten Ebene verschiedenen Ebenen verläuft. Eine Kraftübertragung zwischen einer letzten der mindestens zwei weiteren Übersetzungswellen und der ersten Ausgangswelle verläuft ausschließlich über Zahnräder in der ersten Ebene. Hierdurch ist vorteilhaft erreichbar dass das Getriebe besonders kompakt und platzsparend aufgebaut sein kann. Somit lässt sich ein erfindungsgemäßes Getriebe besonders gut in Küchenmaschinen, insbesondere auch in kompakten Handgeräten einsetzen. Außerdem wird die Aufgabe gelöst durch eine Küchenmaschine gemäß Anspruch 11. Erfindungsgemäß weist die Küchenmaschine ein erfindungsgemäßes Getriebe auf.

Ein Getriebe im Sinne der Erfindung ist ein Räderwerk von ineinandergreifenden Zahnrädern, die ein Drehmoment von einer antriebsseitigen Eingangswelle auf eine oder mehrere abtriebsseitige Ausgangswellen übertragen. Eine Welle ist ein stabförmiges Element zum Übertragen eines Drehmoments, das sich um eine Drehachse dreht. Unter Drehachse soll im Sinne der Erfindung die geometrische Drehachse, also eine Gerade verstanden werden. Eine erfindungsgemäße Eingangswelle weist Kupplungselemente zum Anschließen einer Antriebseinheit auf. Eine Ausgangswelle weist erfindungsgemäß Kupplungselemente zum Anschließen von Werkzeugen auf. Eine Übersetzungswelle ist erfindungsgemäß mit mindestens zwei weiteren Wellen über Zahnräder gekoppelt. Eine Welle kann gleichzeitig Übersetzungs- und Eingangs- oder Ausgangswelle sein.

Erfindungsgemäß stehen die Eingangswelle und die erste Ausgangswelle über mindestens zwei Übersetzungswellen mittels Zahnrädern in Wirkverbindung zueinander. Die Zahnräder sind derart fest auf den Wellen angeordnet, dass eine Drehung des Zahnrads eine entsprechende Drehung der Welle und umgekehrt bewirkt. Jede Welle weist jeweils mindestens ein Zahnrad auf. Ein Zahnrad im Sinne der vorliegenden Erfindung ist gewöhnlich ein Stirnrad, auch als Zylinderrad bezeichnet. Das Zahnrad kann aber auch ein Kegelrad oder ein Kronrad sein. Auch ein Schneckenrad ist ein Zahnrad im Sinne der vorliegenden Erfindung. Ein erfindungsgemäßes Zahnrad kann auch ein Ellipsenrad sein. Weder die Wellen noch die Ebenen müssen notwendigerweise parallel zueinander liegen sondern können zum Beispiel auch rechtwinklig zueinander angeordnet sein. Insbesondere, wenn Kegelräder, Kronräder oder Schneckenräder zum Einsatz kommen, werden wenigstens zwei Wellen nicht parallel sondern zum Beispiel rechtwinklig zueinander liegen.

Im Sinne der vorliegenden Erfindung bedeutet "verschiedenen" im Zusammenhang mit verschiedenen Ebenen, dass die Ebenen funktional verschieden sind. Zwei Zahnräder befinden sich dann in den gleichen funktionalen Ebenen, wenn sie ineinandergreifen. Dabei sind diese Zahnräder gewöhnlich auf zueinander verschiedenen Wellen angeordnet. Zwei Zahnräder befinden sich auch dann in der gleichen funktionalen Ebenen, wenn sie zwar nicht ineinandergreifen, aber in der Weise nebeneinander liegen, dass sie einander berühren oder sogar ineinandergreifen würden, wenn wenigstens eines der beiden Zahnräder einen größeren als seinen tatsächlichen Umfang senkrecht zur Drehachse aufwiese.

Wenn hingegen zwei Zahnräder nicht ineinandergreifen und sich selbst bei größerem Umfang in Richtung senkrecht zur Drehachse nicht einmal berühren würden, befinden sie sich in verschiedenen Ebenen. Ein Zahnrad kann bei entsprechend großer Dicke, also Ausdehnung in Längsrichtung der Welle, auch in mehreren Ebenen gleichzeitig liegen. Dadurch, dass die Zahnräder insgesamt in mindestens drei verschiedenen Ebenen angeordnet sind, kann ein Zwischenraum zwischen zwei Zahnrädern einer Welle von einem Zahnrad einer weiteren Welle genutzt werden, so dass das Getriebe besonders kompakt gestaltet werden kann. Erfindungsgemäß weist das Getriebe mindestens vier voneinander beabstandete Drehachsen auf, so dass in der Minimalkonfiguration von einer Eingangswelle, einer Ausgangswelle und zwei Übersetzungswellen keine der Wellen koaxial angeordnet ist. Beabstandet ist so zu verstehen, dass der Mindestabstand zwischen zwei Wellen dem Durchmesser des kleinsten Zahnraddurchmessers entspricht.

### Bevorzugte Ausgestaltung der Erfindung

Vorteilhafte Aus- und Weiterbildungen, welche einzeln oder in Kombination miteinander eingesetzt werden können, sind Gegenstand der abhängigen Ansprüche. In einer bevorzugten Form der Erfindung sind die Zahnräder in drei oder mehr parallel zueinander liegenden Ebenen angeordnet. Diese Ausführung der Erfindung erlaubt einen besonders einfachen Aufbau des Getriebes. Diese Ebenen stehen senkrecht zu den Drehachsen der Wellen. Zwei ineinandergreifende Zahnräder zweier auf dieser Weise miteinander gekoppelter Wellen liegen somit in der gleichen Ebene. Zwei zu einer Welle gehörende Zahnräder sind parallel zueinander angeordnet und liegen somit in verschiedenen Ebenen. Ein einzelnes Zahnrad kann auch in zwei oder mehr Ebenen gleichzeitig liegen, wenn die Dicke des Zahnrads entsprechend groß ist.

Die Zahnräder bestehen aus einer vorzugsweise kreiszylindrischen Scheibe mit einer vorzugsweise geraden, also parallel zur Drehachse verlaufenden Verzahnung. Vorzugsweise ist die Verzahnung an der Außenseite der Zylinderscheibe angeordnet. Alternativ kann wenigstens ein Zahnrad des Getriebes eine Innenverzahnung aufweisen. In einer weiteren alternativen Ausführung der Erfindung kann wenigstens ein Zahnrad eine Schrägverzahnung aufweisen. In diesem Fall hat die Scheibe des Zahnrads eine konisch-zylindrische Form. Dies hat den Vorteil, dass somit auch Getriebe mit zwei unter einem Winkel angeordneten Wellen realisiert werden können.

In einer bevorzugten Ausführungsform ist das Getriebesystem ein Untersetzungsgetriebe. Das kann den Vorteil mit sich bringen, dass über das Getriebe abtriebsseitig ein Drehmoment der antriebsseitigen Eingangswelle zur Verfügung gestellt werden kann, das auf Kosten der Rotationsgeschwindigkeit größer ist, als das der Eingangswelle. So können verschiedene Werkzeuge, beispielsweise ein Messer, ein Knethaken, ein Besen, ein Metallknethaken oder ein Fleischwolf in einer Küchenmaschine betrieben werden, deren antriebsseitige Eingangswelle hinsichtlich der Drehgeschwindigkeit und des Drehmoments eher nur für Rührbesen geeignet ist. Das Getriebesystem kann aber auch ein Übersetzungsgetriebe sein, bei dem abtriebsseitig eine höhere Rotationsgeschwindigkeit bereitgestellt wird als durch die antriebsseitige Eingangswelle. So können Werkzeuge wie beispielsweise ein Rührer oder ein Schaumschläger betrieben werden, die eventuell eine größere Rotationsgeschwindigkeit als von der Eingangswelle bereitgestellt wird, benötigen.

In einer bevorzugten Ausführungsform weisen die abtriebsseitigen Ausgangswellen jeweils unterschiedliche Untersetzungen auf. Das kann den Vorteil mit sich bringen, dass alternativ in der Küchenmaschine sowohl ein Rührer, ein Knethaken oder ein Fleischwolf zum Einsatz kommen können, die jeweils unterschiedliche Drehmomente und Rotationsgeschwindigkeiten für einen ordnungsgemäßen Betrieb zur Nahrungsmittelbearbeitung benötigen. Zudem kann dies den Vorteil mit sich bringen, dass eine Geschwindigkeitseinstellung am Gerät überflüssig wird. Die Rotationsgeschwindigkeit der antriebsseitigen Eingangswelle muss in diesem Fall nicht länger am Gerät geregelt werden, sondern der Benutzer kann abhängig von der beabsichtigten Bearbeitungsfunktion eine der drei Ausgangswellen mit den unterschiedlichen Geschwindigkeiten wählen, sodass der Bedienkomfort der Küchenmaschine verbessert sein kann. Alternativ können aber auch alle drei Ausgangswellen jeweils die gleiche Untersetzung aufweisen oder auch gar keine Untersetzung aufweisen, sodass über alle drei Ausgangswellen das gleiche Drehmoment übertragen wird und möglicherweise auch ein Drehmoment, das identisch ist mit dem Drehmoment der antriebsseitigen Eingangswelle. So kann man unterschiedliche Werkzeuge mit verwendungsabhängigem Kopplungsdurchmesser an eine jeweils passende Ausgangswelle anbringen und den Werkzeugen unabhängig von der verwendeten Ausgangswelle das jeweils gleiche Drehmoment zur Verfügung stellen.

In einer bevorzugten Ausführungsform stellt das Getriebe abtriebsseitig Untersetzungsfaktoren kleiner als 10 und kleiner als 60 im Verhältnis zur Drehzahl der antriebsseitigen Eingangswelle bereit. So kann der Vorteil erreicht werden, dass für die unterschiedlichsten Verwendungsszenarien ein breites Spektrum an Drehmoment und Rotationsgeschwindigkeit zur Verfügung gestellt werden kann. Wird beispielsweise eine antriebsseitige Eingangswelle mit einer Geschwindigkeit von 15300 U/min (Umdrehungen pro Minute) betrieben, so kann an einer Ausgangswelle eine Umdrehungsgeschwindigkeit von 250 U/min bei stark gesteigertem Drehmoment bereitgestellt werden. An einer anderen Ausgangswelle kann beispielsweise eine Rotationsgeschwindigkeit von 1500 U/min bereitgestellt werden. Dies kann von Vorteil sein, wenn man ein Bearbeitungswerkzeug einsetzen möchte, das ein Drehmoment benötigt, das zwischen dem liegt, was von der antriebsseitigen Eingangswelle mit 15000 U/min und der abtriebsseitigen Ausgangswelle mit 250 U/min bereitgestellt wird. Die genannten Zahlwerte dienen nur der beispielhaften Beschreibung. Für die antriebsseitige Eingangswelle sind beispielsweise auch Geschwindigkeiten von 10000, 21000 oder 30000 U/min möglich. Die Rotationsgeschwindigkeit der Eingangswelle ist somit in jedem Fall bevorzugt kleiner als 40000 U/min, besonders bevorzugt kleiner als 25000 U/min, nochmals besonders bevorzugt kleiner als 15000 U/min und nochmals besonders bevorzugt kleiner als 11000 U/min. Entsprechend ändern sich die Rotationsgeschwindigkeiten der Ausgangswellen und die von ihnen bereitgestellten Drehmomente. In einer bevorzugten Ausführungsform ist ein Untersetzungsfaktor kleiner als 8, in einer besonders bevorzugten Ausführungsform kleiner als 5 und in einer nochmals besonders bevorzugten Ausführungsform kleiner als 3. Ein anderer Untersetzungsfaktor ist bevorzugt kleiner als 100, nochmals bevorzugt kleiner als 80, nochmals bevorzugt kleiner als 65, nochmals bevorzugt kleiner als 40, nochmals bevorzugt kleiner als 30, nochmals bevorzugt kleiner als 20. Durch die genannten Untersetzungsfaktoren kann in der erfindungsgemäßen Küchenmaschine abtriebsseitig ein breites Spektrum an unterschiedlichen Drehmomenten für Werkzeuge zur Verfügung gestellt werden. Der Benutzer kann dadurch den Vorteil haben, dass sich die Küchenmaschine für eine Vielzahl von Bearbeitungsaufgaben eignet.

In einer bevorzugten Ausführungsform sind die abtriebsseitigen Ausgangswellen gleichzeitig betreibbar. Dies kann den Vorteil haben, dass der Benutzer vor Verwendung der Küchenmaschine nicht erst Einstellungen vornehmen muss, um die gewünschte Ausgangswelle zu aktivieren, sondern einfach nur das gewünschte Bearbeitungswerkzeug in die erfindungsgemäße Küchenmaschine einsetzen muss, und daraufhin die Küchenmaschine einschalten kann. Die Bedienung der Küchenmaschine kann also vereinfacht werden und Arbeitsschritte können vorteilhafter Weise entfallen. Besonders bevorzugt ist es, dass die Ausgangswellen gleichzeitig nutzbar sind. Das heißt, dass an allen drei Ausgangswellen zeitgleich Werkzeuge betrieben werden können. So kann beispielsweise ein Rührer gleichzeitig mit einem Messer und einem Metallknethaken verwendet werden. Alle drei Werkzeuge benötigen jeweils ein anderes Drehmoment um optimal funktionieren zu können. Sind alle drei Ausgangswellen gleichzeitig nutzbar, so kann der Benutzer zeitgleich beispielsweise rühren, schneiden und kneten. Vorteil kann also sein, dass die Küchenmaschine mehr Arbeitsschritte in kürzerer Zeit erledigen kann. Alternativ können die Ausgangswellen aber auch getrennt voneinander betreibbar sein. Auch können die Ausgangswellen derart beschaffen sein, dass der Benutzer nur eine der drei Ausgangswellen zur selben Zeit nutzen kann, beispielsweise indem durch das Gehäuse des eingesetzten Werkzeugs die beiden nicht genutzten Ausgangswellen verdeckt werden. Dies kann vorteilhaft sein, um ihn vor Verletzungen zu schützen.

Vorzugsweise weist das Getriebe neben Eingangs- und Ausgangswellen mindestens zwei weitere Übersetzungswellen auf. Besonders vorzugsweise weist das Getriebe drei, vier, fünf, sechs, sieben, acht, neun, zehn oder mindestens elf Übersetzungswellen auf. Vorzugsweise sind die Drehachsen der Übersetzungswellen nicht koaxial angeordnet. In anderen Worten bedeutet dies, dass keine zwei Übersetzungswellen eine gemeinsame Drehachse aufweisen. Hiermit kann vorteilhaft erreicht werden, dass jede Welle an beiden Enden gelagert werden kann, wodurch ein besonders störungsfreier Lauf der Welle sichergestellt werden kann.

Bei einem bevorzugten Getriebe weist jede Übersetzungswelle mindestens zwei Zahnräder auf. Besonders vorzugsweise weist mindestens eine Übersetzungswelle drei Zahnräder auf. Nochmals besonders vorzugsweise weist mindestens eine Übersetzungswelle vier oder mehr Zahnräder auf. Vorzugsweise haben die verschiedenen Zahnräder einer Welle unterschiedlich große Durchmesser. Die Zahnräder einer Übersetzungswelle können mit einem Zahnrad einer Eingangswelle, einer Ausgangswelle und/oder einem Zahnrad einer anderen Übersetzungswelle in Wirkverbindung stehen. Besonders vorzugsweise kann eine Eingangswelle mit zwei Übersetzungswellen gekoppelt sein. Eine Übersetzungswelle ist vorzugsweise mit einer, besonders vorzugsweise mit zwei, nochmals besonders vorzugsweise mit drei oder vier anderen Wellen über Zahnräder in Wirkverbindung gekoppelt, wobei dies Eingangs-, Ausgangs- und Übersetzungswelle einschließen kann. Vorzugsweise kann auch eine Eingangs- und/oder Ausgangswelle zwei oder mehr Zahnräder aufweisen.

Vorzugsweise sind die Eingangs- und Ausgangswellen parallel zueinander ausgerichtet. Vorzugsweise sind die Übersetzungswellen parallel zueinander ausgerichtet. Besonders vorzugsweise sind alle Wellen parallel zueinander ausgerichtet. Dass zwei Wellen parallel zueinander ausgerichtet sind bedeutet insbesondere, dass ihre jeweiligen Drehachsen parallel zueinander ausgerichtet sind. Weiter besonders vorzugsweise sind die parallelen Wellen alle gleich lang und vorzugsweise zwischen zwei senkrecht zu den Wellen liegenden parallelen Ebenen angeordnet, wobei die Kupplungselemente der Eingangs- und Ausgangswellen aus den Ebenen herausragen können. In alternativen Ausführungen kann mindestens eine Drehachse einer Welle in einem Winkel zu einer anderen Drehachse ausgerichtet sein, beispielsweise die Drehachse einer Ausgangswelle. Besonders vorzugsweise kann mindestens eine Drehachse in einem rechten Winkel, weiter besonders vorzugsweise in einem 45-Gradwinkel zu einer anderen Drehachse angeordnet sein. In diesem Fall wird vorzugsweise ein Kegelradgetriebe, besonders vorzugsweise ein Schneckengetriebe verwendet. In weiteren alternativen Ausführungen der Erfindung ist mindestens ein Zahnrad elliptisch, beispielsweise um neben einer Drehung auch eine translatorische Bewegung einer Ausgangswelle und somit eines Werkzeugs zu realisieren. Der kleinste Abstand zwischen zwei parallelen Drehachsen entspricht vorzugsweise mindestens dem Durchmesser des kleinsten Zahnrads, besonders vorzugsweise den doppelten Durchmesser. In einer alternativen Ausführung der Erfindung können wenigstens zwei Wellen koaxial zueinander angeordnet sein. Besonders vorzugsweise sind zwei Eingangs- oder zwei Ausgangswellen koaxial zueinander angeordnet. Vorzugsweise weisen die koaxialen Wellen jeweils Kupplungselemente auf, die vorzugsweise unabhängig voneinander ankuppelbar sind, so dass der Vorteil erreicht werden kann, dass an einem Küchengerät Anschlusskupplungen angeordnet werden können, die mit verschiedenen Werkzeugen bzw. Antriebseinheiten verwendet werden können, so dass die Werkzeuge bzw. Antriebseinheiten ihrem vorgesehenen Zweck entsprechend an die jeweils vorgesehene Welle ankuppeln.

Vorzugsweise weist das Getriebe zwei Ausgangswellen auf. Weiter bevorzugt sind drei Ausgangswellen, vier Ausgangswelle oder fünf oder mehr Ausgangswellen. Vorzugsweise sind die Übersetzungen zwischen der Eingangswelle und den Ausgangswellen jeweils verschieden. So kann vorteilhaft erreicht werden, dass mit einer Antriebseinheit verschieden schnelle Ausgangsdrehzahlen anliegen, beziehungsweise verschieden starke Drehmomente. Vorzugsweise sind eine Ausgangswelle parallel zur Eingangswelle und eine Ausgangswelle senkrecht zur Eingangswelle angeordnet. In einer weiteren bevorzugten Ausführung weist das Getriebe zwei oder drei Eingangswellen auf, die vorzugsweise nicht koaxial zueinander angeordnet sind. Vorzugsweise ist eine Eingangswelle in einem Winkel zu einer anderen Eingangswelle angeordnet.

Vorzugsweise werden die Wellen einschließlich ihrer Zahnräder und eventuell vorhandener Kupplungselemente jeweils einstückig gefertigt, besonders vorzugsweise aus einem Kunststoff und weiter besonders vorzugsweise im Spritzgussverfahren. Somit ist vorteilhaft erreichbar, dass die einzelnen Getriebekomponenten (Wellen und Zahnräder) mit geringen Fertigungstoleranzen in hohen Stückzahlen hergestellt werden können. Alternativ können die Zahnräder und Wellen auch im rapid prototyping-Verfahren, zum Beispiel mit einem 3D-Drucker hergestellt werden.

In einer bevorzugten Ausführungsform ist die Küchenmaschine zur Nahrungsmittelverarbeitung geeignet. Dort können die genannten Vorteile und Eigenschaften der erfindungsgemäßen Küchenmaschine vorteilhaft zum Tragen kommen. Beispielsweise kann die Küchenmaschine ein Mixer, eine Multifunktionsküchenmaschine, ein Knetgerät, ein Rührgerät, ein Fleischwolf, ein Schneidgerät, ein Schlagsahnezubereitungsgerät, ein Stabmixer oder auch allgemein eine Standküchenmaschine sein, die zur Nahrungsmittelverarbeitung geeignet ist. In diesen Maschinen kann es für den Benutzer von großem Vorteil sein, drei Ausgangswellen in koaxialer Geometrie zur Verfügung zu haben. Dies kann ihm die Verarbeitung von Nahrungsmitteln stark vereinfachen. Alternativ kann die Küchenmaschine aber auch ein Kühlschrank, eine Gefriertruhe, eine Mikrowelle oder ein Müllschlucker sein.

### Kurzbeschreibung der Zeichnungen

Weitere vorteilhafte Ausgestaltungen der Erfindung werden nachfolgend anhand von in den Zeichnungen dargestellten Ausführungsbeispielen, auf welche die Erfindung jedoch nicht beschränkt ist, näher beschrieben.

Es zeigen schematisch:
Fig. 1a und 1b
   ein Schema einer horizontalen Getriebeanordnung gemäß dem Stand der Technik in Seitenansicht und Draufsicht;
Fig. 2a und 2b
   ein Schema einer vertikalen Getriebeanordnung gemäß dem Stand der Technik in Seitenansicht und Draufsicht;
Fig. 3a und 3b
   ein Schema einer Mehrebenen-Getriebeanordnung gemäß der Erfindung in Seitenansicht und Draufsicht;
Fig. 4
   eine perspektivische Ansicht eines erfindungsgemäßen Getriebes;
Fig. 5
   eine Seitenansicht eines erfindungsgemäßen Getriebes; und
Fig. 6a, 6b und 6c
   Ansichten des Getriebes der Fig. 1a und 1b in perspektivischer Darstellung von außen (6a), in Querschnittsdarstellung (6b) und in Expositionsdarstellung

### Detaillierte Beschreibung von Ausführungen der Erfindung

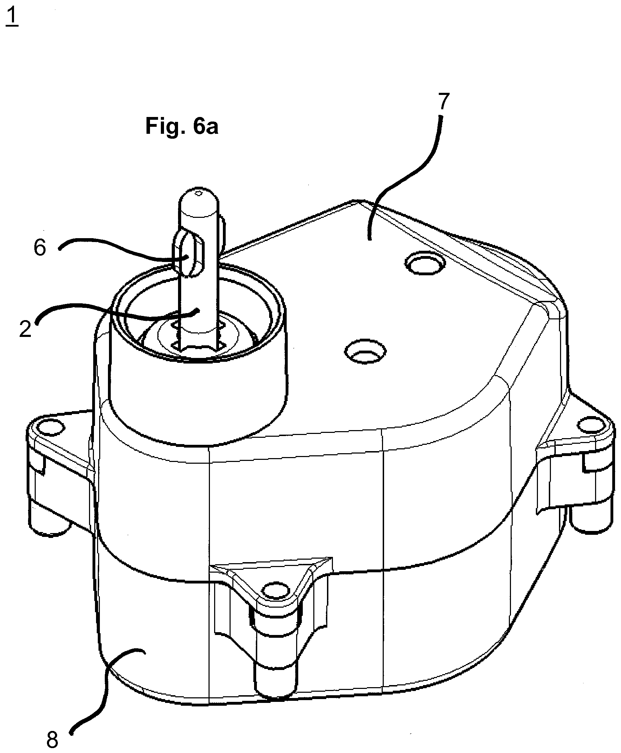

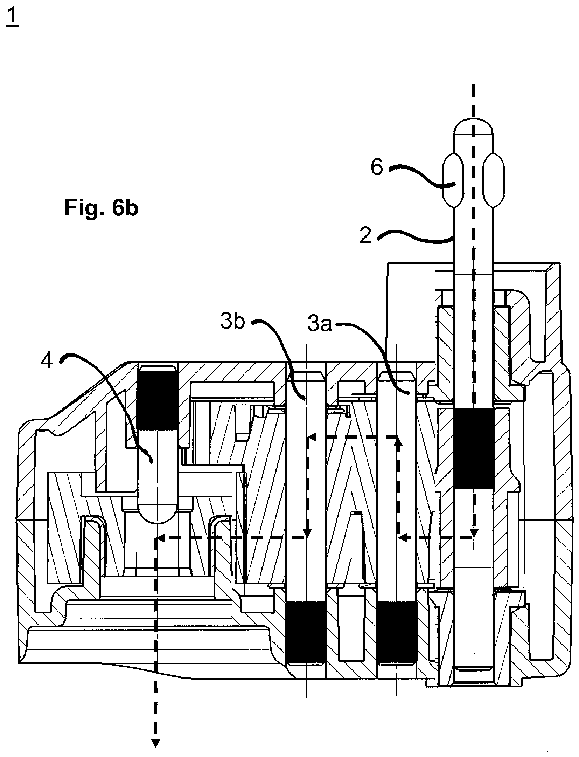

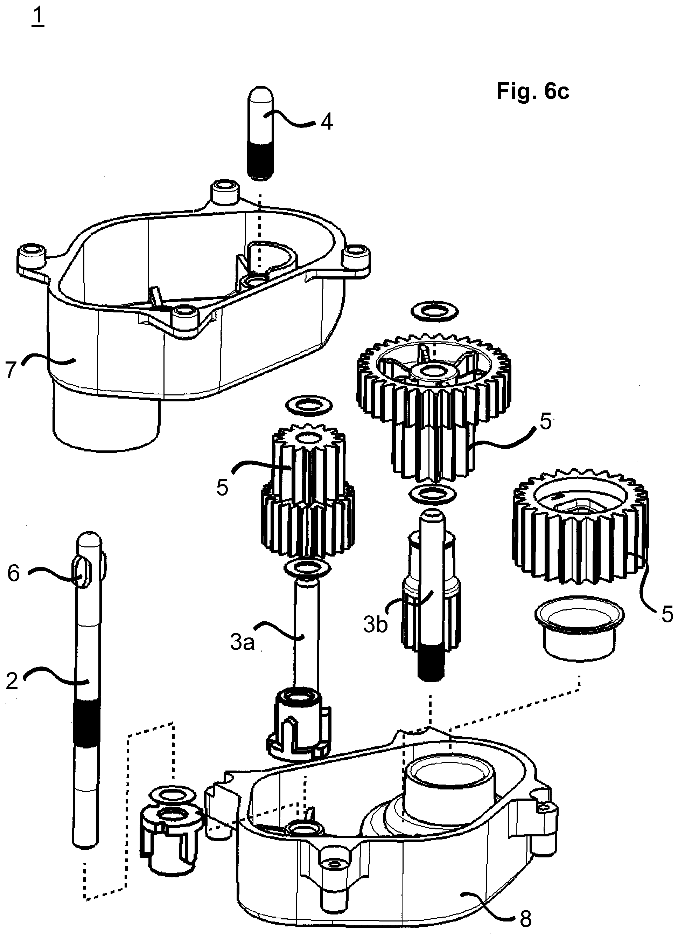

Figur 1 zeigt eine schematische Ansicht eines Getriebes 1 gemäß dem Stand der Technik in seitlicher Ansicht (Fig. 1a, senkrecht zu den Drehachsen) und Draufsicht (Fig. 1b, Blickrichtung parallel zu den Drehachsen). Das gleiche Getriebe 1 ist in Figur 6 dargestellt, von außen eingeschlossen in ein oberes 7 und ein unteres 8 Gehäuseteil (Fig. 6a), im Querschnitt (Fig. 6b, um 180° gedreht gegenüber Fig. 1 und Fig. 6a) und in Expositionsdarstellung (Fig. 6c). Die Flussrichtung der Antriebskraft verläuft von der Eingangswelle 2 links zur Ausgangswelle 4 rechts im Zick-Zack wie durch den Pfeil angedeutet. Die beiden Übersetzungswellen 3a, 3b sind jeweils als Doppelzahnräder ausgebildet. Die Zahnräder sind somit in zwei parallel zueinander verlaufende Ebenen angeordnet. Um bei einer solchen Anordnung einen minimalen Abstand ad zwischen Eingangswelle 2 und Ausgangswelle 4 zu erreichen müssen die Drehachsen der Übersetzungswellen 3a, 3b auf einer Seite der durch die beiden Drehachsen der Eingangswelle 2 und Ausgangswelle 4 aufgespannten Ebene a-a angeordnet sein.

Eine alternative aus dem Stand der Technik bekannte Getriebeanordnung 1 ist schematisch in Figur 2 dargestellt, wobei Fig. 2a wieder eine seitliche Ansicht und Fig. 2b eine Draufsicht ist. Hier verläuft der Kraftfluss von der Eingangswelle 2 vertikal im Zick-Zack wie durch den Pfeil angedeutet zur Ausgangswelle 4 über drei Übersetzungswellen 3a, 3b, 3c. Der Abstand ad zwischen der Eingangswelle 2 und der Ausgangswelle 4 kann in dieser Konfiguration im Vergleich zur horizontalen Zick-Zack-Anordnung kleiner werden.

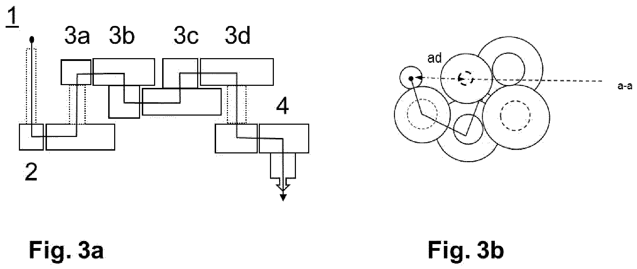

Figur 3a und 3b zeigen eine schematische Darstellung eines Getriebes 1 gemäß der Erfindung mit einer Eingangswelle 2, drei Übersetzungswellen 3a, 3b, 3c und 3d und einer Ausgangswelle 4. Die Zahnräder des Getriebes sind in drei Ebenen angeordnet. Hierdurch ist es möglich, dass Zahnräder verschiedener Wellen einander überlappend angeordnet sind. Zahnräder mit großem Durchmesser können in einem Zwischenraum zwischen zwei weiter beabstandeten Zahnrad-Ebenen angeordnet werden. Somit wird eine besonders kompakte und platzsparende Anordnung des Getriebes ermöglicht. Wie in der Draufsicht der Figur 3b zu erkennen ist, können die Achsen der Übersetzungswellen auf beiden Seiten der Ebene a-a angeordnet werden. Der Abstand ad zwischen der Eingangswelle und der Ausgangswelle kann durch die erfindungsgemäße Lösung besonders klein werden.

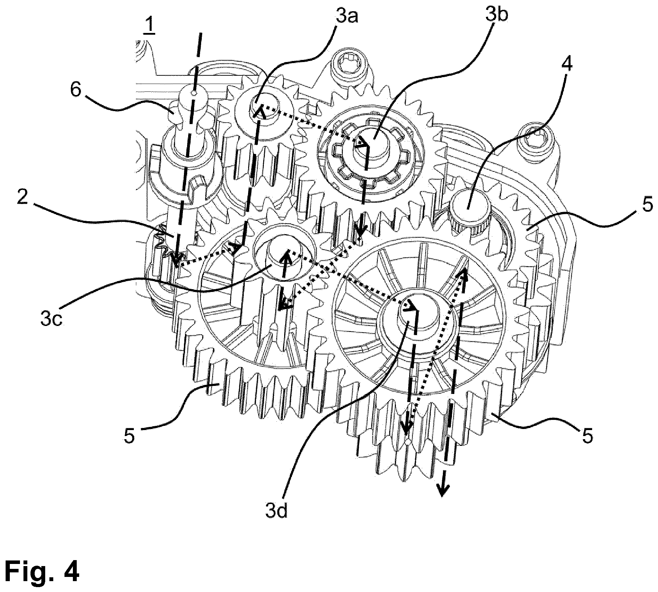

Figur 4 zeigt eine beispielhafte Ausführung eines erfindungsgemäßen Getriebes 1. Eine Eingangswelle 2 mit einer Kupplung 6 für eine Antriebseinheit ist über insgesamt vier Übersetzungswellen 3a, 3b, 3c, 3d mit einer Ausgangswelle 4 mit einer Kupplung für ein Werkzeug (in der Ansicht ist nur eine Ausgangswelle zu sehen) wirkverbunden. Eine zweite Ausgangswelle ist in der perspektivischen Ansicht nicht zu sehen, da sie von den übrigen Wellen und Zahnrädern verdeckt wird. Die Drehachsen der Wellen sind parallel zueinander angeordnet. Der Verlauf der Kraftübertragung von der Eingangswelle 2 zur Ausgangswelle 4 ist durch die Pfeile in der Figur 4 angedeutet. Gestrichelte Pfeile deuten die Kraftübertragung entlang der Wellen an, gepunktete Pfeile stehen für die Kraftübertragung zwischen den Wellen über die Zahnräder. Die Eingangswelle 2 weist ein Zahnrad 5 auf, das in der ersten (tiefsten) Ebene angeordnet ist. Es greift in ein ebenfalls in der ersten Ebene angeordnetes Zahnrad 5 der ersten Übersetzungswelle 3a, die ein zweites Zahnrad 5 in der dritten (obersten) Ebene aufweist. Die Übertragung verläuft weiter in der dritten Ebene zur zweiten Übersetzungswelle 3b. Von der zweiten 3b zur dritten 3c Übersetzungswelle verläuft die Übertragung der Antriebskraft in der zweiten (mittleren) Ebene und von der dritten Übersetzungswelle 3c zur vierten Übersetzungswelle 3d wieder in der dritten Zahnradebene. Die weitere Übertragung zur Ausgangswelle 4 verläuft über die erste Zahnradebene.

Insgesamt wird durch die gezeigte Anordnung eine Untersetzung erreicht, so dass hohe Eingangsdrehzahlen zu niedrigeren Ausgangsdrehzahlen konvertiert werden, wodurch andererseits das an der Ausgangswelle 4 anliegende Drehmoment größer als das an der Eingangswelle 2 anliegende Drehmoment ist. Die zweite in Figur 4 nicht sichtbare Ausgangswelle weist ein höheres Untersetzungsverhältnis als die erste Ausgangswelle 4 auf.

Bei der in Figur 4 gezeigten Ausführung, sind die Drehachsen der ersten 3a und zweiten 3b Übersetzungswellen in Blickrichtung jenseits einer durch die Drehachsen der Eingangswelle 2 und Ausgangswelle 4 aufgespannten Ebene angeordnet. Die Drehachsen der dritten 3c und vierten 3d Übersetzungswellen sind in Blickrichtung diesseits der Ebene angeordnet.

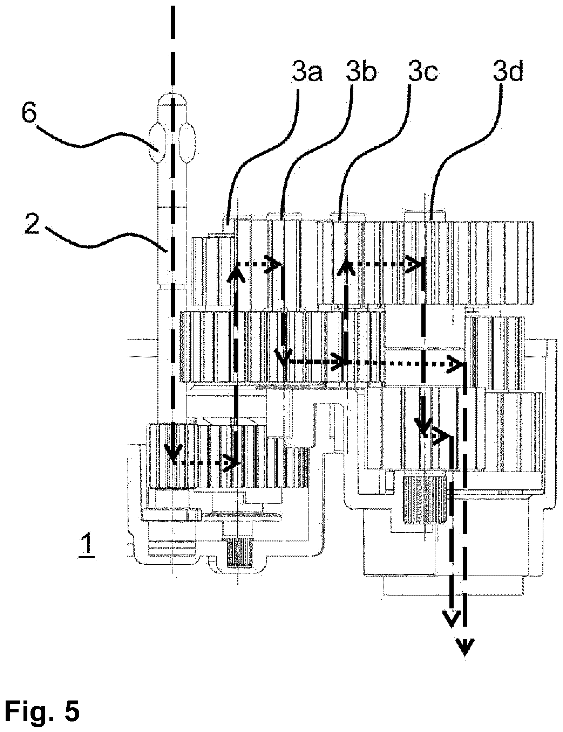

Die besonders kompakte Anordnung der Wellen und Zahnräder des in Figur 4 dargestellten Ausführungsbeispiels eines erfindungsgemäßen Getriebes 1 wird durch die in Figur 5 abgebildete Seitenansicht besonders deutlich. Die Zahnräder der Wellen sind in drei Ebenen parallel zueinander angeordnet. Die Pfeile veranschaulichen wie in Figur 4 den Verlauf der Antriebskraft. Von der zweiten Übersetzungswelle 3b wird neben der dritten Übersetzungswelle 3c auch die zweite Ausgangswelle angetrieben, die aber von den Zahnrädern verdeckt wird und somit nicht sichtbar ist.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

### Bezugszeichenliste

- 1: Getriebe
- 2: Eingangswelle
- 3: Übersetzungswelle (3a, 3b, 3c, 3d)
- 4: Ausgangswelle
- 5: Zahnrad
- 6: Kupplung
- 7: Oberes Gehäuseteil
- 8: Unteres Gehäuseteil

## Patentansprüche

1. Getriebe (1) für eine Küchenmaschine mit einer antriebsseitigen Eingangswelle (2) und mindestens einer abtriebsseitigen Ausgangswelle (4), wobei die Eingangswelle (2) und eine erste Ausgangswelle (4) über mindestens zwei weitere Übersetzungswellen (3a, 3b, 3c, 3d) mittels Zahnrädern (5) in Wirkverbindung zueinander stehen, so dass eine Drehung der Eingangswelle (2) auf die erste Ausgangswelle (4) übertragen wird, wobei eine Kraftübertragung von der Eingangswelle (2) über die mindestens zwei weiteren Übersetzungswellen (3a, 3b, 3c, 3d) zur ersten Ausgangswelle (4) verläuft, wobei die Zahnräder (5) in drei oder mehr verschiedenen Ebenen angeordnet sind und die Wellen (2, 3a, 3b, 3c, 3d, 4) drehbar um mindestens vier voneinander beabstandete Drehachsen angeordnet sind,
wobei eine Kraftübertragung zwischen der Eingangswelle (2) und einer ersten (3a) der mindestens zwei weiteren Übersetzungswellen ausschließlich über Zahnräder (5) in einer ersten Ebene verläuft,
wobei eine Kraftübertragung zwischen den mindestens zwei weiteren Übersetzungswellen (3a, 3b, 3c, 3d) ausschließlich über Zahnräder (5) in von der ersten Ebene verschiedenen Ebenen verläuft,
**dadurch gekennzeichnet, dass**
eine Kraftübertragung zwischen einer letzten (3d) der mindestens zwei weiteren Übersetzungswellen und der ersten Ausgangswelle (4) ausschließlich über Zahnräder (5) in der ersten Ebene verläuft.

2. Getriebe (1) nach Anspruch 1, **dadurch gekennzeichnet, dass** die Zahnräder (5) in drei oder mehr parallel zu einander liegenden Ebenen angeordnet sind.

3. Getriebe (1) nach Anspruch 1, **dadurch gekennzeichnet, dass** das Getriebe (1) ein Untersetzungsgetriebe ist.

4. Getriebe (1) nach einem der vorhergehenden Ansprüche, **dadurch gekennzeichnet, dass** die abtriebsseitigen Ausgangswellen (4) jeweils unterschiedliche Untersetzungen aufweisen.

5. Getriebe (1) nach einem der vorhergehenden Ansprüche, **dadurch gekennzeichnet, dass** jeweils mindestens zwei Zahnräder (5) auf den Übersetzungswellen (3) angeordnet sind.

6. Getriebe (1) nach einem der vorhergehenden Ansprüche, **dadurch gekennzeichnet, dass** die Eingangswelle (2), die mindestens eine Ausgangswelle (4) und die Übersetzungswellen (3) parallel zueinander ausgerichtet sind.

7. Getriebe (1) nach einem der vorhergehenden Ansprüche, **dadurch gekennzeichnet, dass** das Getriebe (1) genau eine Eingangswelle (2) und mindestens zwei Ausgangswellen (4) aufweist.

8. Getriebe (1) nach einem der vorhergehenden Ansprüche, **dadurch gekennzeichnet, dass** auf beiden Seiten einer gedachten Ebene, die durch die Drehachsen jeweils der Eingangswelle (2) und der ersten Ausgangswelle (4) aufgespannt wird, jeweils mindestens eine Drehachse einer Übersetzungswelle (3) angeordnet ist.

9. Getriebe (1) nach einem der vorhergehenden Ansprüche, **dadurch gekennzeichnet, dass** die Wellen (2, 3, 4) einschließlich der Zahnräder (5) jeweils einstückig gefertigt sind.

10. Küchenmaschine, **dadurch gekennzeichnet, dass** die Küchenmaschine ein Getriebe (1) nach einem vorhergehenden Ansprüche aufweise.

## Claims

1. Gearing (1) for a food processor with a drive-side input shaft (2) and at least one output-side output shaft (4), wherein the input shaft (2) and a first output shaft (3) have an active connection to one another via at least two further step-up shafts (3a, 3b, 3c, 3d) by means of toothed gears (5), so that a rotation of the input shaft (2) is transmitted to the first output shaft (4), wherein a force transfer proceeds from the input shaft (2) via the at least two further step-up shafts (3a, 3b, 3c, 3d) to the first output shaft (4), wherein the toothed gears (5) are arranged in three or more different planes and the shafts (2, 3a, 3b, 3c, 3d, 4) are arranged such that they can be rotated about at least four axes of rotation spaced apart from one another,
wherein a force transfer between the input shaft (2) and a first (3a) of the at least two further step-up shafts proceeds exclusively via toothed gears (5) in a first plane,
wherein a force transfer between the at least two further step-up shafts (3a, 3b, 3c, 3d) proceeds exclusively via toothed gears (5) in planes different from the first plane,
**characterised in that**
a force transfer between a last (3d) of the at least two further step-up shafts and the first output shaft (4) proceeds exclusively via toothed gears (5) in the first plane.

2. Gearing (1) according to claim 1, **characterised in that** the toothed gears (5) are arranged in three or more planes lying parallel to one another.

3. Gearing (1) according to claim 1, **characterised in that** the gearing (1) is a step-down gearing.

4. Gearing (1) according to one of the preceding claims, **characterised in that** the output-side output shafts (4) have different reductions in each case.

5. Gearing (1) according to one of the preceding claims, **characterised in that** at least two toothed gears (5) are arranged on the step-up shafts (3) in each case.

6. Gearing (1) according to one of the preceding claims, **characterised in that** the input shaft (2), the at least one output shaft (4) and the step-up shafts (3) are oriented in parallel with one another.

7. Gearing (1) according to one of the preceding claims, **characterised in that** the gearing (1) has precisely one input shaft (2) and at least two output shafts (4).

8. Gearing (1) according to one of the preceding claims, **characterised in that** arranged on both sides of an imaginary plane, which is spanned by the axes of rotation of the input shaft (2) and the first output shaft (4) in each case, is at least one axis of rotation of a step-up shaft (3) in each case.

9. Gearing (1) according to one of the preceding claims, **characterised in that** the shafts (2, 3, 4) including the toothed gears (5) are manufactured in one piece in each case.

10. Food processor, **characterised in that** the food processor has a gearing (1) according to one of the preceding claims.

## Revendications

1. Transmission (1) pour un robot de cuisine avec un arbre d'entrée côté menant (2) et au moins un arbre de sortie côté mené (4), dans lequel l'arbre d'entrée (2) et un premier arbre de sortie (4) se trouvent en liaison active l'un avec l'autre via au moins deux arbres de démultiplication supplémentaires (3a, 3b, 3c, 3d) au moyen de roues dentées (5), de sorte qu'une rotation de l'arbre d'entrée (2) est transmise au premier arbre de sortie (4), dans laquelle une transmission de force de l'arbre d'entrée (2) s'étend via les au moins deux arbres de démultiplication supplémentaires (3a, 3b, 3c, 3d) vers le premier arbre de sortie (4), dans laquelle les roues dentées (5) sont disposées dans trois plans différents ou plus et les arbres (2, 3a, 3b, 3c, 3d, 4) sont disposés en rotation autour d'au moins quatre axes de rotation distants l'un de l'autre, dans laquelle une transmission de force entre l'arbre d'entrée (2) et un premier (3a) des au moins deux arbres de démultiplication supplémentaires s'effectue exclusivement via les roues dentées (5) dans un premier plan, dans laquelle une transmission de force entre les au moins deux arbres de démultiplication supplémentaires (3a, 3b, 3c, 3d) s'étend exclusivement via des roues dentées (5) dans des plans différents du premier plan, **caractérisée en ce qu'**une transmission de force entre un dernier (3d) des au moins deux arbres de démultiplication supplémentaires et le premier arbre de sortie (4) s'étend exclusivement via des roues dentées (5) dans le premier plan.

2. Transmission (1) selon la revendication 1, **caractérisée en ce que** les roues dentées (5) sont disposées dans trois plans ou plus parallèles l'un à l'autre.

3. Transmission (1) selon la revendication 1, **caractérisée en ce que** la transmission (1) est un démultiplicateur de vitesse.

4. Transmission (1) selon l'une des revendications précédentes, **caractérisée en ce que** les arbres de sortie côté mené (4) présentent respectivement des démultiplications différentes.

5. Transmission (1) selon l'une des revendications précédentes, **caractérisée en ce qu'**au moins deux roues dentées (5) sont respectivement disposées sur les arbres de démultiplication (3).

6. Transmission (1) selon l'une des revendications précédentes, **caractérisée en ce que** l'arbre d'entrée (2), l'au moins un arbre de sortie (4) et les arbres de démultiplication (3) sont orientés parallèlement l'un à l'autre.

7. Transmission (1) selon l'une des revendications précédentes, **caractérisée en ce que** la transmission (1) présente précisément un arbre d'entrée (2) et au moins deux arbres de sortie (4).

8. Transmission (1) selon l'une des revendications précédentes, **caractérisée en ce qu'**au moins un axe de rotation respectif d'un arbre de démultiplication (3) est disposé sur les deux côtés d'un plan donné, déterminé par les axes de rotation respectifs de l'arbre d'entrée (2) et du premier arbre de sortie (4).

9. Transmission (1) selon l'une des revendications précédentes, **caractérisée en ce que** les arbres (2, 3, 4) y compris les roues dentées (5) sont respectivement fabriqués en une seule pièce.

10. Robot de cuisine, **caractérisé en ce que** le robot de cuisine présente une transmission (1) selon l'une des revendications précédentes.
